# EUROPEAN PATENT APPLICATION

(11) **EP 1 116 947 A1**
(43) Date of publication of application: **18.07.2001**
(21) Application number: 00100188.2
(22) Date of filing: 13.01.2000
(51) Int. Cl.: G01M 19/00

(54) **Thermal cycling device**

(71) Applicant: EMA Equipment Pte Ltd., SE 349574 Singapore (SG)
(72) Inventor: Mazzali, Carlo, 20052 Monza (Milano) (IT)
(74) Representative: Modiano, Guido, Dr.-Ing.

(57) **Abstract**

A thermal cycling device, particularly for products meant to be subjected to thermal cycling, which comprises a cold chamber (4) and a hot chamber (3) inside which the products are to be placed cyclically; and lifting means (6,7) which are arranged so as to transfer, between the cold chamber (4) and the hot chamber (3), one portion at a time of the contents of the cold chamber (4) and of the hot chamber (3), in a cyclic manner, from one chamber to the other.

## Description

The present invention relates to a cycling device, particularly for products to be subjected to thermal cycles.

It is known that products that are to be subjected to thermal cycles, for example for testing or screening, such as electronic components, must be placed in appropriate devices which allow the cycling between a hot and a cold chamber where the products are made to pass in order to subject them to a preset number of thermal cycles having a chosen duration.

Thermal cycling is performed for example by first placing the products in a hot chamber and then, at the end of the high-temperature heat treatment, by transferring said products to the cold chamber, in a single operation, in order to subject them to the low-temperature heat treatment.

This procedure therefore allows to subject the products to a chosen thermal cycle, with a temperature range determined by the difference in temperature between the hot and the cold chamber.

However, the above solution suffers drawbacks, due to the fact that the products are loaded all at once into the hot chamber and then transferred all together from the hot chamber to the cold chamber; accordingly, there is a period during which no products are present in the hot chamber or in the cold chamber.

This idle time substantially affects the product cycling time.

Furthermore, the simultaneous transfer of all the products from the hot to the cold chamber, or viceversa for other kinds of thermal cycling, entails less than optimum temperature stability inside such chambers, since if the heated products are transferred from the hot chamber to the cold chamber, the temperature of the cold chamber necessarily tends to rise; viceversa, if the products are transferred from the cold chamber to the hot chamber, the temperature of said hot chamber will tend to drop.

The aim of the present invention is to provide a thermal cycling device, particularly for products to be subjected to thermal treatment, which allows to optimize the cycling times, thus minimizing idle times.

Within the scope of this aim, an object of the present invention is to provide a thermal cycling device which allows to provide higher thermal stability than that obtainable with conventional devices.

Another object of the present invention is to provide a thermal cycling device which allows to automate a cycling process.

Another object of the present invention is to provide a thermal cycling device which is highly reliable, relatively easy to manufacture and at competitive costs.

This aim, these objects and others which will become apparent hereinafter are achieved by a thermal cycling device, particularly for products to be subjected to thermal cycling, comprising a cold chamber and a hot chamber inside which the products are to be placed cyclically, characterized in that it comprises lifting means which are arranged so as to transfer, between said cold and said hot chamber, one portion at a time of the contents of said cold chamber and of said hot chamber, in a cyclic manner, from one chamber to the other.

Further characteristics and advantages of the invention will become apparent from the description of preferred embodiments of the device according to the invention, illustrated only by way of non-limitative example in the accompanying drawings, wherein:

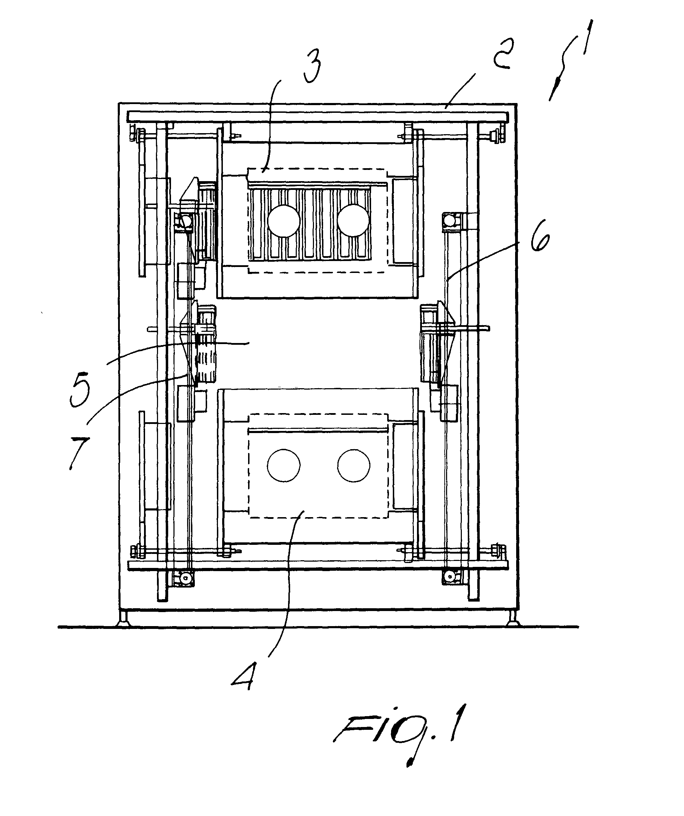

Figure 1 is a front elevation view of the device according to the present invention;

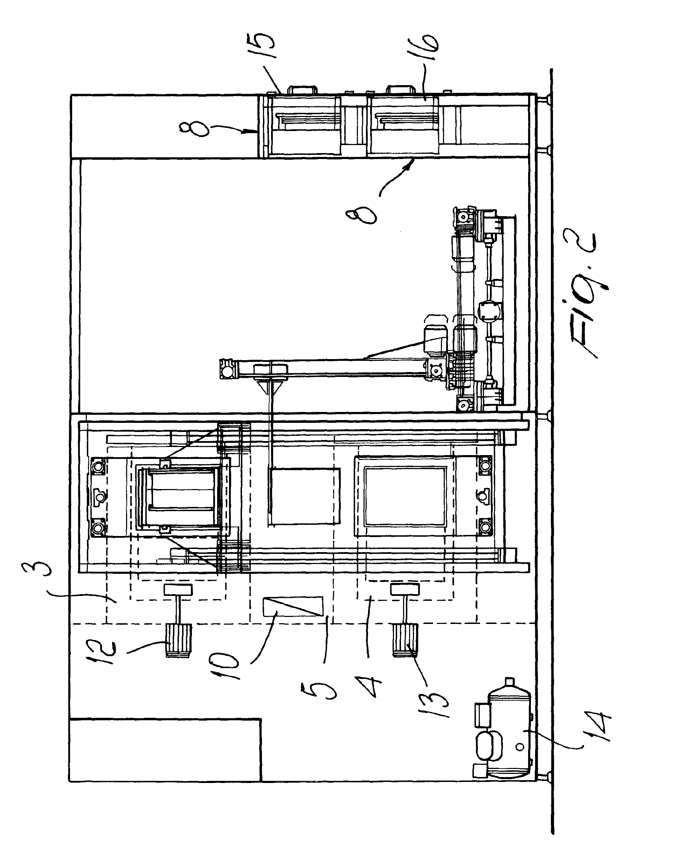

Figure 2 is a lateral elevation view of the device according to the invention;

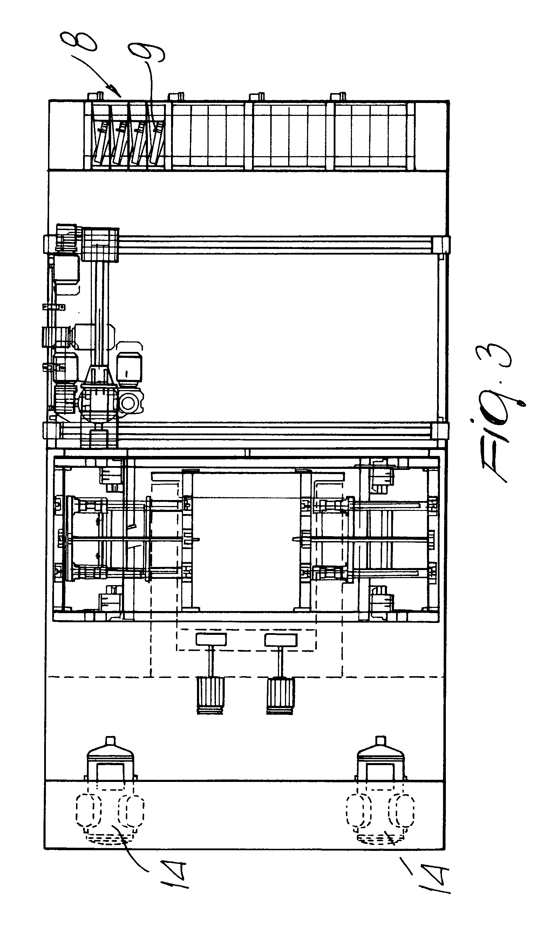

Figure 3 is a plan view of the device according to the invention;
Figures 4 and 5 are views of a pallet designed to load containers which accommodate the products to be subjected to thermal cycling;
Figure 6 is a side view of the pallet of Figures 4 and 5; and

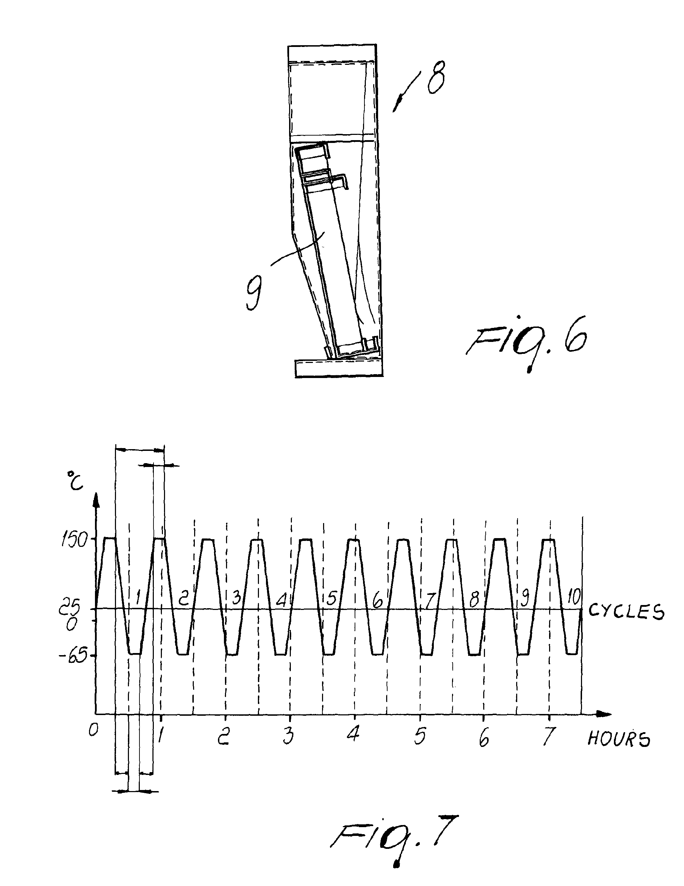

Figure 7 is a chart which plots an example of thermal cycling to which a product is subjected by means of the device according to the present invention.

With reference to the above Figures, the thermal cycling device according to the present invention, generally designated by the reference numeral 1, comprises an outer frame 2 which contains a first chamber 3, termed hot chamber, and a second chamber 4, termed cold chamber; such chambers are stacked, and between them there is a conditioning chamber 5 whose function is described in detail hereinafter.

Laterally with respect to the mutually stacked hot chamber 3 and cold chamber 4 there are loading means 6 and unloading means 7 which are conveniently constituted by two lifting units arranged laterally with respect to the hot chamber 3 and the cold chamber 4.

Each lifting unit of the pair of lifting units 6 and 7 transfers from one chamber to the other products which must be subjected to thermal cycling.

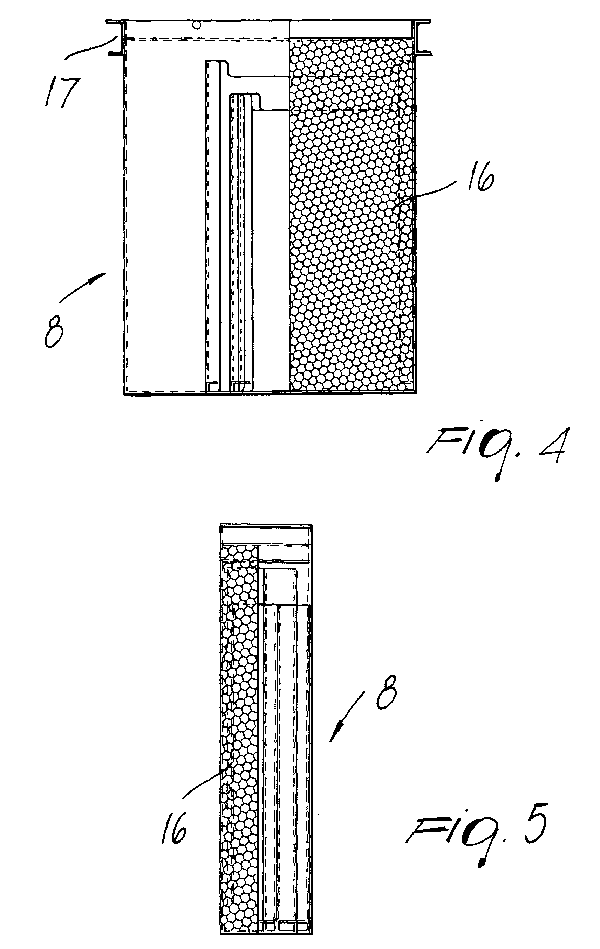

In particular, the lifting unit 6 picks up a pallet, designated by the reference numeral 8 in Figures 4 to 6, which internally accommodates containers which contain the products to be subjected to thermal cycling, and deposits the pallet in the hot chamber 3.

At this point, the lifting unit 7, which is symmetrical with respect to the lifting unit 6, removes from the pallet 8 one container at a time, designated by the reference numeral 9, in order to move it into the cold chamber 4 after passing through the conditioning chamber 5.

In this manner, the lifting unit 7 conveys one container 9 at a time from the hot chamber 3 to the cold chamber 4, while the lifting unit 6 introduces in the hot chamber 3 one container 9 at a time, as a replacement of the container 9 that has been transferred from the hot chamber 3 to the cold chamber 4.

The conditioning chamber 5 allows to perform preconditioning by forced air circulation which is provided by means of a set of fans 10 arranged at the intermediate chamber 5.

This allows to save energy, since it is possible to cool the hot container 9 by means of the cold container 9 that passes from the chamber 4 to the intermediate chamber 5 before being placed in the hot chamber 3. Accordingly, the products are transferred from the hot chamber to the cold chamber one container 9 at a time instead of all at once as occurs in conventional devices, therefore allowing to maintain a better temperature stability, since only one container 9 at a time is moved from the hot chamber to the cold chamber and viceversa.

Furthermore, at least one of the lifting units 6 and 7 is designed to remove and receive from a robot the pallet 8 that is to be placed in the cold chamber 3 (or in the hot chamber 4).

Forced ventilation means 12 are provided for the forced horizontal circulation of air between the products contained in the containers 9, thus ensuring their rapid and uniform heat exchange.

Likewise, additional forced ventilation means 13 are provided for a similar purpose as regards the cold chamber 4.

The hot chamber is suitably provided with a battery of armored and finned resistors with a large exchange surface, while the cold chamber is provided with an evaporator and with a water-condensing cascade cooling system. The reference numerals 14 designate compressors of the device according to the present invention.

The preconditioning chamber 5 has, as mentioned, a fan for dehumidifying the air, while the cold chamber is provided with continuous flushing with nitrogen in order to prevent the formation of ice and the consequent loss of efficiency.

The reference numerals 15 and 16 respectively designate a loading area and an unloading area of the device according to the invention, in which the pallets 8 are respectively loaded and unloaded.

The pallets may also be loaded and unloaded by means of a single robot which supervises these operations for a pair of similar devices arranged side by side.

Figures 4 to 6 illustrate, as mentioned, a pallet 8 which is used to accommodate a plurality of containers 9 which contain products to be subjected to thermal cycling.

Said pallet structure is provided with a parallelepiped made of sheet metal which is appropriately contoured and has, on its two shorter sides, two support and sliding brackets so that it is slideable inside the hot chamber 3 and the cold chamber 4, and a portion 16 made of perforated metal plate, arranged on an oblique side, for ventilation of the containers 8 accommodated inside the pallet.

The pallet is also provided with engagement means 17 which are adapted to accommodate forks of a robot for lifting the pallet 8.

The temperature difference between the hot chamber and the cold chamber can be between two values above zero, or between one value above zero and one below zero, or between two values which are both below zero, depending on the type of thermal treatment to which the product is to be subjected.

Optionally it is possible to provide temperature control also for the intermediate chamber, in order to further minimize thermal instability due to the insertion in the chambers of a container at a temperature which is different from that of the other containers contained therein.

The two lifting units 6 and 7 cause a vertical translatory motion of the pallet 8 from the cold chamber to the chamber 4 and viceversa.

The ventilation means 12 and 13 of the cold chamber 3 and of the hot chamber 4, respectively, force the air to follow a forced path through the evaporator of the refrigeration circuit or the heating resistors and through the containers 8 loaded with products to be subjected to thermal cycling.

Control of the entire device is entrusted to a computer, complete with an operator panel with a liquid-crystal digital display panel and a control keyboard.

In practice it has been observed that the device according to the invention fully achieves the intended aim and objects, since it allows to provide thermal cycling of products by moving one container at a time, without therefore altering the thermal stability of the cold chamber and of the hot chamber through which products must pass to perform cycling.

The transfer of one container at a time allows not only to reduce idle times, due to the fact that in conventional devices an entire batch of products is moved from one chamber to the other and therefore there is always one inactive chamber, but also to perform preconditioning of the containers in the intermediate chamber arranged between the cold chamber and the hot chamber.

The device thus conceived is susceptible of numerous modifications and variations, all of which are within the scope of the inventive concept.

Thus, for example, it is possible to provide a different arrangement of the hot chamber and of the cold chamber, for example mutually side by side instead of one above the other. Finally, all the details may be replaced with other technically equivalent elements.

In practice, the materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A thermal cycling device, particularly for products to be subjected to thermal cycling, comprising a cold chamber and a hot chamber inside which the products are to be placed cyclically, characterized in that it comprises lifting means which are arranged so as to transfer, between said cold chamber and said hot chamber, one portion at a time of the contents of said cold chamber and of said hot chamber, in a cyclic manner, from one chamber to the other.

2. The device according to claim 1, characterized in that it comprises a preconditioning chamber which is arranged between said cold chamber and said hot chamber.

3. The device according to claim 1, characterized in that it comprises ventilation means which are associated with said cold chamber and with said hot chamber in order to induce a forced air circulation through said chambers.

4. The device according to claim 2, characterized in that it comprises additional ventilation means which are associated with said preconditioning chamber.

5. The device according to claim 1, characterized in that said lifting means are adapted to cause a vertical translatory motion of said products from said cold chamber to said hot chamber and viceversa.

6. The device according to claim 1, characterized in that it comprises a loading station and an unloading station.

7. The device according to claim 1, characterized in that said products are contained in containers, said lifting means being adapted to transfer from said cold chamber to said hot chamber and viceversa one container at a time.
